Europäisches Patentamt

European Patent Office

Office européen des brevets

(11) Publication number: **0 188 363**
A1

(12) **EUROPEAN PATENT APPLICATION**

(21) Application number: 86300197.0

(22) Date of filing: 14.01.86

(51) Int. Cl.⁴: **F 16 L 59/16**
**F 16 L 13/00, F 16 L 13/11**

(30) Priority: 14.01.85 CA 472055

(43) Date of publication of application:
23.07.86 Bulletin 86/30

(84) Designated Contracting States:
AT BE CH DE FR GB IT LI LU NL SE

(71) Applicant: SHAW INDUSTRIES LTD.
25 Bethridge Road
Rexdale Ontario M9W 1M7(CA)

(72) Inventor: Tailor, Dilip K.
25 Kensington Road Apt. 804
Bramalea Ontario, L6T 3W8(CA)

(72) Inventor: Steele, Robert E.
132, Carrington Drive Richmond Hill
Ontario, L4C 5Z3(CA)

(74) Representative: Smith, Norman Ian et al,
F.J. CLEVELAND & COMPANY 40-43 Chancery Lane
London WC2A 1JQ(GB)

(54) Preinsulated pipeline joint.

(57) A joint for insulated pipeline sections having a tubular sleeve (10) with its ends (19) shrunk down toward and sealed to the outer surfaces of the casings (16) of the pipeline sections (12, 13). The interior of the sleeve is filled with insulation material (25), usually a rigid polyurethane foam. The sleeve (10) is secured against axial movement relative to the pipeline sections (12, 13) and the sleeve (10) and its securement provide sufficient rigidity that tensile and compressive forces acting on one pipeline (12) section are transmitted through the joint to the other pipeline section (13). With this arrangement, the joint moves in unison with the pipeline (12, 13) when the latter undergoes axial movement, and risk of dislodging of the sleeve (10) and rupture of the seal is reduced.

FIG. 3

EP 0 188 363 A1

<u>PREINSULATED PIPELINE JOINT</u>

<u>DESCRIPTION</u>

Preinsulated pipelines which carry fluids at non-ambient temperatures typically consist of a service or carrier pipe, covered with insulating material such as foam. The insulating material is generally encased with a casing made from either a polymeric material, such as high density polyethylene, or a metal such as steel or aluminum. The pre-insulated pipes are connected in the field by welding the service pipe and then insulating and jacketing the joint.

A suitable jacketing is a critical component of the joint, and it must provide a water-tight connection to the rest of the pipe and mechanical protection to the insulation in operation, and must form a water barrier to the insulation. It is often desirable to employ the joint jacketing to facilitate the formation of foam insulation in the joint. The formation of the foam insulation may be done before or after the joint jacketing is applied. In order that the jacketing continues to protect the joint from water ingress, it is necessary that the jacketing itself is not damaged, or dislocated from the joint area or undergoes distortion so that a path is created for water ingress to occur.

The insulated pipeline system is often buried underground, and during its operation, it encounters a variety of loading conditions. These include

a) Pressure Stresses: internal pressures due to surging, hydrostatic pressures, etc., apply stresses to the pipeline.

b) Thermal Stresses: the temperature fluctuation inside and outside the pipeline creates thermal stresses in the line; a major effect being expansion and contraction of the pipeline.

c) Flexural Stresses: the pipeline undergoes flexing due to internal and external forces, and also due to the thermal stresses.

d) Dead weight and external stresses: the weight of the pipeline and its attached components, plus the fluid it carries apply stresses on the pipeline, particularly on the insulation and on the pipe casing. The stresses caused by external forces are through agents such as soil loads, vehicular loads, earthquake loads, etc.

Usually more than one of these forces act in combination, and the finished joint must withstand these loading forces without breakdown of the seal.

One of the most severe and potentially destructive conditions is when the thermal stresses act in combination with the external forces. The thermal stresses cause longitudinal movement of the pipe. Modern piping layouts provide for various means of compensating for expansion, including expansion loops and prestraining. This always results in considerable longitudinal movement of the piping, particularly near the ends of the pipeline or at the expansion loops.

The foam in the pre-insulated piping system is normally bonded to the service pipe and also to the outer casing. Thermal stresses will cause differential strains in the inner service pipe and the outer casing. However the shear strength of the foam is normally sufficient to resist the resulting shear forces and the strains from the service pipe are transferred to the outer casing. Hence, the entire insulated pipeline will undergo longitudinal movement in unison.

When the dead weights and external forces exist along with the pipeline movement, the joint components are severely tested. In designing these insulated pipelines, earth pressures of 50 kilonewtons/meter square are often assumed.

With the commonly employed jointing components of which the applicants are aware, these thermal and external stresses cause the joints to fail in the following possible ways:

a) The joint jacketing component gets dislocated from the joint, e.g. the jacketing remains stationary due to external loads, while the pipeline moves through it.

b) The tensioning, flexuring or compression of the sealing medium between the joint jacketing and the pipe jacket may break the seal.

c) A component of the ground (e.g. soil, sand, pebble) may penetrate between the joint jacketing and the pipe casing and break the seal.

d) The joint jacketing may become punctured, abraded, wrinkled or otherwise deformed, creating a path for water ingress.

Quite often, more than one of the above failures occurs, allowing water ingress into the joint, and thus causing failure of the insulation.

The present invention provides a joint, a method of forming a joint and a sleeve for use in forming the joint whereby the problems of known joint arrangements may be at least mitigated.

The joint of the invention employs as the jacketing for the joint insulation a tubular sleeve of which at least each end portion is heat shrinkable. In use, the sleeve is positioned to extend between the casings of the two insulated pipeline sections to be joined, and the end portions are heat shrunk down toward the outer surfaces of the adjacent pipeline casings. Each shrunk down end portion may be secured to the respective casing through tight frictional gripping of the end portion around the casings, fusion of the end portion to the casing, inward deformation of the casing at the zone gripped by the shrunk down end portion, the use of an adhesive, for example a high shear strength adhesive between the shrunk down portion and the casing, and/or by bonding or tight frictional engagement between the sleeve and a relatively rigid joint insulation material encased within the sleeve. The insulation material may be introduced before the sleeve is placed in position and heat shrunk, or after, e.g. by introducing a liquid precursor of a rigid foam through a hole formed in the side wall of the sleeve.

The sleeve and its securement to the pipeline casings offer sufficient rigidity that axial tensile or compressive forces applied to the casing of one pipeline section are transmitted through the sleeve to the casing of the other pipeline section.

Preferred forms of joint, joint-forming methods and sleeves for use in forming the joint will now be described, by way of example only, with reference to the accompanying drawings in which:

Figures 1 and 2 show a longitudinal cross-section and a perspective view of one form of sleeve, respectively;

Figures 3 to 7 show longitudinal cross-sections through different forms of joint in accordance with the invention;

Figure 6A shows an enlarged cross-section through a modified form of joint, taken on an area circled at A in Figure 6;

Figure 8 shows a longitudinal cross-section through a further form of sleeve in accordance with the invention;

Figure 9 shows a joint formed with the sleeve of Figure 8; and

Figures 10 and 11 show side views of preferred forms of closure plugs.

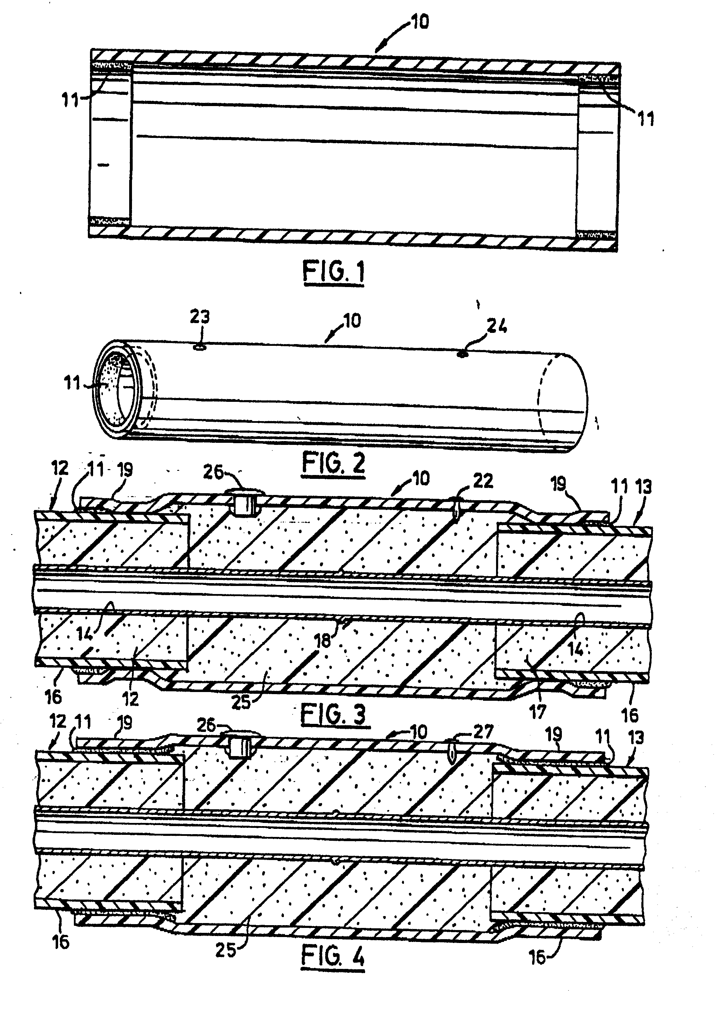

Referring to the drawings, wherein like reference numerals indicate like parts, Figures 1 and 2 show a thick wall tubular sleeve 10 made from a polymeric material, which has been crosslinked either chemically or by irradiation and then heat deformed to a larger diameter and then cooled. The casing thus formed is rendered heat-shrinkable. The inside surface of the casing is coated with suitable functional coating 11, either partially at its ends or over the entire surface area. The functional coating 11 may be an adhesive or sealant, but is preferably an adhesive which is strong and relatively hard.

In use, the sleeve 10 is applied to form an insulated joint between two insulated pipeline sections 12 and 13, for example as shown in Figure 3. Each consists of a service or carrier pipe 14, usually of steel, a casing 16, usually of a polymeric material such as high density polyethylene, or a metal such as steel or aluminum, and insulation material 17, usually a rigid polyurethane foam, between the pipe and the casing. As supplied, the pipe 14 extends beyond the ends of the casing 16 and the insulation material 17.

Before forming the joint, the sleeve 10 is slid over one end of the casing 16 of one of the sections 12 or 13. The ends of the pipes 14 are juxtaposed and welded together at 18.

The sleeve 10 is then slid into the position shown in Figure 3 and heat is applied to its end portions 19 to shrink these down toward and into securement relative to the casings 16.

In the example shown in Figures 1, 2 and 3, the functional coating 11 is at the extreme ends of the sleeve 10 and covering only partially the area of the shrunk ends.

In Figure 4, the sleeve 10 is modified in that the functional coating 11 is at the extreme ends and covering the entire inner surface of the heat-shrunk ends 19. It may be noted that the functional coating may cover the entire inner surface of the sleeve 10.

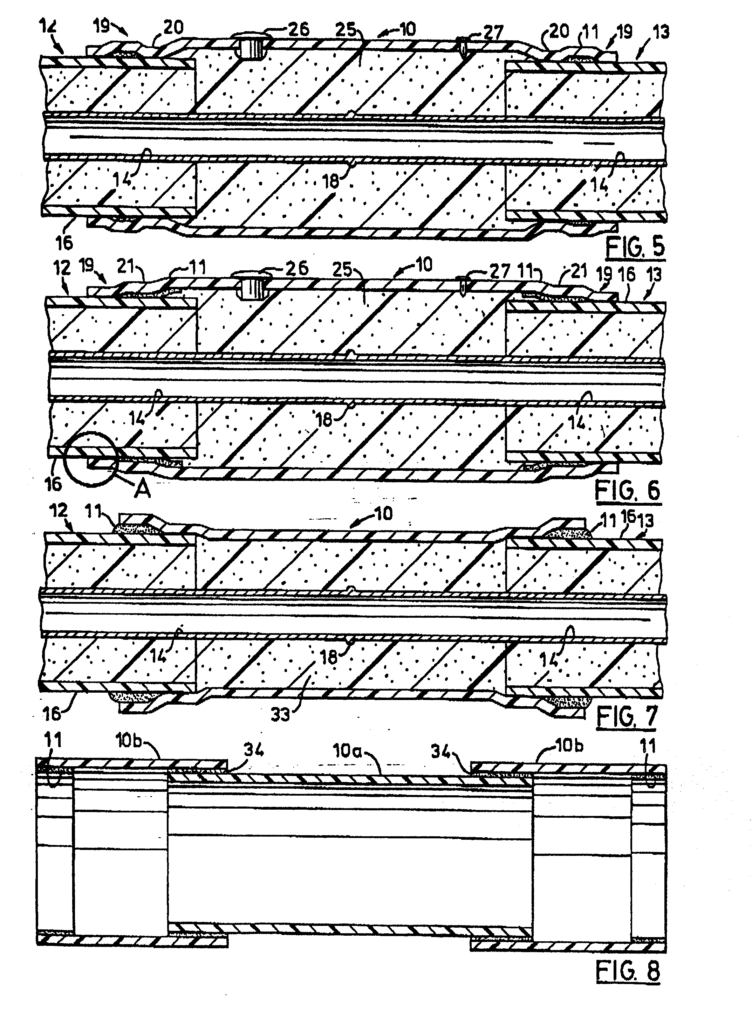

In Figure 5, the extreme ends of the sleeve 10 are without any coating, but a narrow circumferentially extending adjacent zone is covered with the functional coating 11. A zone 20 spaced axially inwardly from the functional coating 11 is also shrunk, making contact with the pipe casing 16.

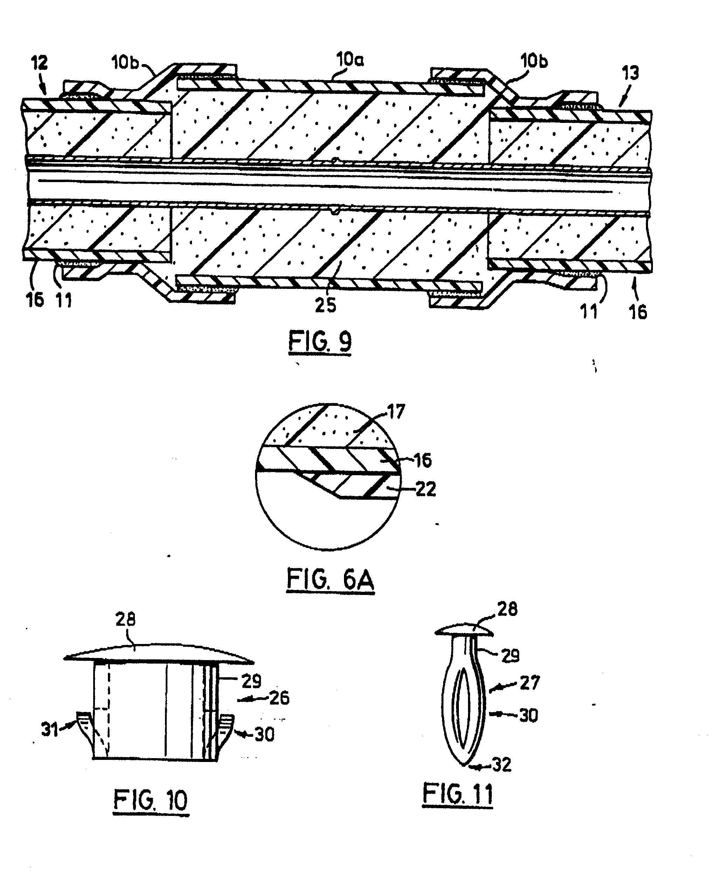

In Figure 6, the extreme ends of the sleeve 10 are not covered with coating material, but the shrunk zones 21 axially inward from the ends are covered with functional coating 11. As before the coating 11 may cover the entire inner surface of the sleeve 10. As shown in Fig. 6A, the ends 22 of the sleeve 10 may be tapered.

In the Examples shown in Figures 1 to 6, after the ends of the sleeve have been shrunk down, and after optional pressure testing of the joint, the interior of the joint is filled with joint insulation by introducing a liquid precursor of a polymeric resin foam, usually a rigid polyurethane resin foam, through a relatively large hole 23 formed through the side wall of the sleeve 10. After the liquid foam precursor has been introduced, a plug 26, shown in more detail in Figure 10, is inserted into the hole 23 thus preventing the expanding mixture from flowing out of the hole 23. Air displaced from the interior of the sleeve 10 and expanding foam are allowed to flow out of a further smaller hole 24 through the sleeve wall, and axially spaced from the larger hole 23, until the foam has solidified, after which the hole 24 is plugged using a plug 27 shown in more detail in Figure 11. Preferably, the plugs 26 and 27 are of the resilient plastic kind conventionally employed as fasteners in the automotive and furniture manufacturing industries. Each has a relatively large head 28 which will seat on the periphery of the hole, a body 29 fitting snugly in the hole and a laterally enlarged resiliently compressible hollow lower body portion 30, so that the plug snap-fits into the hole. The plug 26 has upwardly outwardly extending resilient tangs 31, the upper edges of which engage the inner side of the sleeve, resisting withdrawal. The plug 27 has a pointed lower end 32 to assist in penetrating the gelled foam.

In the example of Figure 7, joint insulation material 33 is applied over the welded pipes 14 and between the ends of the pipe sections 12 and 13 before sliding the sleeve 10 into position. The insulation 33 may be in the form of pre-molded half-cylinders, or so-called "half-shells", or may be molded in place using a cylindrical e.g. metal, such as aluminum, mold, which may or may not be removed before the sleeve 10 is applied over the joint. The insulation 33 may be rigid polyurethane foam.

In Figure 7, the whole sleeve 10 is heat shrunk. The diameter of the insulation 33 is less than the external diameter of the pipe casings 16. The sleeve 10 has functional coating 11 at the extreme end zones.

Figure 8 shows a modified sleeve provided as a unitary product. It has a non-heat-shrinkable middle portion 10a and enlarged diameter heat-shrinkable end portions 10b connected to the portion 10a with high shear strength adhesive 34. The end zones of the end portions 10b have a functional inner coating 11.

Figure 9 shows a joint produced using the sleeve of Figure 8. The method of forming the joint is similar to that described above with reference to Figure 3. The joint insulation may be formed after the application of the sleeve or may be preformed and applied before applying the sleeve.

In all cases, the design and the material properties of the sleeve 10 are selected so that it can perform the required installation and in operation.

A suitable functional coating material 11 is utilised between the sleeve and the pipe casing 16 to prevent ingress of water into the joint. The sealing material may be grease, putty, mastic sealant, semi-crystalline adhesive, solvent-based adhesive or a thermosetting adhesive. In order for the functional coating to function as a water tight seal, it should desirably adhere to both the pipe casing 16 and the sleeve 10, be hydrophobic, and flow sufficiently during installation to completely seal the gap between the pipe casing 16 and the sleeve 10. Desirably it should form a bond which does not deteriorate appreciably during use as a result of exposure to water, salts in the ground-water, microbes and fungi. Further, it should be able to withstand any movement of the pipeline, when buried, without losing its bond or seal. This will generally dictate the use of a high shear strength adhesive unless there is little or no movement.

In order to perform its function during installation and in operation the heat shrinkable sleeve 10 should desirably have sufficient mechanical properties, including tensile strength, hardness, penetration resistance, impact resistance, elongation, stiffness, resistance to extremes of temperature, and properties of resistance to degradation or deterioration in contact with deleterious materials present in the underground environment such as water, soil, salts and microbes. While the mechanical properties of the finished product depend on its dimensions (i.e. its thickness and diameter) the material of which the sleeve is formed should desirably have minimum physical properties as follows:

a) Tensile strength at break: minimum 1500 p.s.i. (ASTM D638, 2 inch/minute) - The preferred value is 4000 to 6000 p.s.i. but it can be as high as 8000 p.s.i.

b) Tensile elongation at break: minimum 100% (ASTM D638, 2 inch/minute). The preferred value is 500 to 800% elongation but it can be as high as 1000% elongation.

c) Shore D hardness: minimum 40 (ASTM D2240). The preferred value is between 60 to 72 but it can be as high as 85.

d) Secant modulus @ 2% strain: minimum 16,000 p.s.i. (ASTM D638, extension rate 2"/minute). The preferred value is 40,000 to 80,000 p.s.i. but it can be as high as 500,000 p.s.i.

e) Low temperature brittleness: less than -25°C (ASTM D746). The preferred value is less than -50°C, and it can be as low as -120°C.

f) Vicat softening point: minimum 72°C (ASTM D1525). The preferred value is 90°C to 130°C but it can be as high as 170°C.

g) Resistance to environmental stress cracking: pass minimum 336 hours (ASTM D-1693, 10% IGEPAL).

The materials suitable for making the heat shrink sleeve are generally well known to those skilled in the art. A variety of polymeric materials and their blends can be used. However, the preferred materials are polyolefins such as high density polyethylene, medium density polyethylene, linear low density polyethylene, polypropylenes and blends of one or more of these materials with one another or with other materials such as copolymers or elastomers. These materials are given in way of examples only.

The wall thickness to be employed for the sleeve 10 varies with its environment of service, the type of pipeline, the operating conditions, and pipe diameters etc. However, the preferred wall thickness of the sleeve 10 is between 2.5 mm and 6 mm in its expanded form, the more preferred being 3 to 4 mm. In some extreme applications, e.g. very large diameter pipe and under severe stress conditions, thicknesses of up to 10 mm or greater may be advantageous.

The degree of heat shrink recoverability desirable for the sleeve depends on the application to which it is to be put, but generally a minimum recovery of 5 percent is preferred. However, the preferred recovery is between 20 and 50%. The recovery can be as high as 90% e.g. when one sleeve size is used on more than one pipe size.

All of the above characteristics of the sleeve ensure that the sleeve can facilitate joint finishing, and withstand the stresses and strains encountered during installation and in operations. These stresses and strains are in the form of impact, abrasion, penetration, tension, flexure, compression etc.

In many cases a heated, insulated line will experience axial movement relative to the ground in which it is buried. This may be due to temperature cycling of the carrier pipe, causing it to expand and contract, or it may be due to settling, freezing or thawing of the soil. Thus, the joint sleeve must be capable of resisting such movements without being displaced or dislodged and without deterioration of its seal. Desirably the functional coating 11 will be an adhesive having adequate shear strength and peel strength. We have found that the shear strength should preferably not be less than 3 p.s.i. at the operating temperature of the outer surface of the pipeline, and the peel strength should exceed 3 lb/linear inch. More preferably, the shear strength should be greater than 10 p.s.i. and the peel strength greater than 10 pli. (Test methods: shear strength measured at 0.05 inch/minute, ASTM D-1002 and peel strength measured at 12 in/minute, ASTM D1000).

The sleeve of the invention possesses unique features that facilitate the finishing of the joint quickly and effectively.

The sleeve is a one piece product, which in the method of joint finishing is shrunk at either end position using a suitable heating device, which is preferably a propane or butane torch, electric heaters, infra-red heaters, etc.

The preferred form of sleeve in accordance with the invention provides a complete system to seal and protect the joint, including the above-described plugs for sealing the foaming and vent holes.

After the foam is injected or poured into the joint through the foaming hole 23 in the casing, the plug 26 is inserted into the hole. The plug has the compressible tangs 31 at the foot of the region, the tangs having a diameter larger than the hole 23. The plug 26 is pushed through the hole, the tangs 31 compress, and on exiting on the other side of the hole, the tangs 26 expand again and become engaged on the inner side of the sleeve, thus providing resistance to removal from the hole. The engaged plug 26 will resist being pushed out by the pressure from the rising foam. The head 28 of the plug is relatively flat, so that it does not offer resistance to the external stresses when relative pipe movement occurs. Thus the low profiled head 28 and the engaged body of the plug provide permanent retention of the plug in the hole. While this form of plug has been shown to be effective, any plug or other closure element which will resist the pressure of foaming may be employed.

In order to provide a water tight seal, an adhesive or a sealant may be applied to the plug, or to the hole area or both, before plugging the hole. The sealant can be a thermosetting, solvent-based adhesive, a mastic or a putty or a semi-crystalline or hot melt material. If hot melt material is used then heat is applied to melt the adhesive.

The vent hole 24 allows air to escape as the foam rises. After the joint cavity is filled with foam, any excess foam emerging from the hole is cleaned off, a suitable adhesive or sealant as described above is applied to the hole area and the vent hole plug 27 is pushed into the hole. The foot 32 of the plug is pointed so that it can pierce through the foam. The middle section 30 of the trunk is bulged, having a diameter slightly larger than the vent hole so that it is anchored tightly into the hole. The head 28 of the plug is relatively flat and flush with the casing surface.

Desirably, the joint is pressure tested after the sleeve is heat shrunk, but prior to foaming, to confirm a good seal. The sleeve of the invention facilitates this procedure.

After the sleeve is installed and has cooled sufficiently for the adhesive to harden, air pressure can be readily applied through the foaming hole 23, while the vent hole 24 is temporarily plugged. The plug 27 can be held down manually or by applying temporarily a pressure-sensitive tape on top of it. Soap solution is applied at the sleeve-pipe casing connection to check for leaks.

Test pressures, typically up to 14.5 p.s.i. (1.0 bar) for as long as 10 to 30 minutes may be applied. The sleeve made from the material having the properties given above will withstand these test pressures.

Pressures of as much as 10.8 p.s.i. and sometimes even more are generated due to the rising foam, which also develops exothermic heating raising the foam temperature as high as 70°C, and sometimes even more. The casing made from the material having properties as described above will withstand these pressures and temperatures.

The novel features of the sleeve of the invention and of the joint prepared with it, ensure that the entire joint and all its components including the foam, sleeve, functional sealing material, and plugs (if used), move in unison with the entire pipeline, even in the presence of external loads, dead weights, internal pressures, or flexural stresses.

One of the advantageous characteristics of the heat shrink sleeve is its ability to conform to the contours and irregularities of shape of the substrate it is applied over. It has been found that when the two ends of the sleeve are shrunk on the joint as illustrated in Figures 3 to 6, and then the joint is foam-filled, a uniquely profiled joint is obtained. The shape and the characteristics of the joint make it capable of withstanding the combination of the pipe movements and the external forces.

Referring to Figure 3, the internal diameter of the shrunk down portion 19, adjacent the functional coating 11 or in contact with the pipe casing 16, is smaller than the diameter of the middle portion of the sleeve 10 or the diameter of the joint insulation foam 25. In the event of pipe movement, say from left to right, the end face of the pipe insulation 17 of section 12 will push against the joint foam 25, which in turn will transfer the stress to the end face of the pipe insulation 17 of section 13.

The larger diameter of the joint foam 25 provides a mechanical obstruction to relative longitudinal movement of the constricted shrunk down sections 19 of the sleeve 10 with smaller diameters. It has been found that for the joint foam 25 to provide good mechanical obstruction, the diameter of the joint foam 25 in the middle, non-shrunk portion of the sleeve 10, and hence also the internal diameter of the sleeve 10 itself at this point should desirably be more than 1 mm greater than the internal diameter of the shrunk down portion 19. The preferred difference in diameters is 3 to 10 mm, but it can be as much as 20 to 50 mm for large diameter pipes.

The significance of this arrangement is that it provides for the sleeve 10 to move in unison with the pipeline sections 12 and 13 in the presence of disruptive forces, and ensures that the sealing functional material 11 does not experience stresses that could break the seal.

The design of the casings as illustrated in Figures 3 to 6 are by way of example only. Many variations are possible in terms of the positioning of the functional sealing materials 11.

The beneficial effect of the differential diameters can also be obtained when the foam is applied first and then the entire sleeve is shrunk onto the joint. The finished joint will still appear as in Figures 3 to 6 if the diameter of the pre-applied foam 25 is larger than the internal diameter of the shrunk down portions 19.

The beneficial effect of the differential diameter is also obtained when, as in Figure 7, the diameter of the joint foam 33 is smaller than the diameter of the pipe casing 16. The difference in diameters is preferably greater than 0.75 mm, and more preferably greater than 2 mm to be effective. In this case, the pipe casing 16 offers the mechanical obstruction to the relative movement of the constricted middle portion of the sleeve 10 with smaller diameter.

In the event of pipe movement, say from left to right, the stresses from the pipe casing 16 will be transferred to the constricted sleeve 10 by engagement against the inwardly stepped shoulder at the transition of the sleeve 10 from the casing 16 to the outer surface of the joint insulation, and the adequately rigid sleeve 10 will in turn transfer the stress to the adjacent pipe casing 16.

It will thus be seen that it is highly advantageous to form the joint with the sleeve 10 having a circumferentially extending zone adjacent the joint insulation material 25 or 33 which is of internal diameter different from the external diameter of the pipeline casing 16.

It has been found that even when no difference in diameter exists between the sleeve adjacent the joint insulation material and the pipe casing, the advantageous features of the present joint can ensure that the joint will withstand pipe movement and external forces. These additional features complement the beneficial effects of the differential diameters when these exist.

In order for the applied sleeve to function effectively, it must remain well anchored to the joint. Several such anchor points exist in the finished joint.

Firstly, the contact area between the joint insulation foam 25 or 33 and the sleeve 10 generates a frictional bond. When the joint is foam-filled after the sleeve 10 has been installed, the rising foam 25 generates internal pressure against the sleeve, so that hoop stresses exist at the sleeve-foam interface. When the sleeve is applied on a prefoamed joint, the shrinking forces apply hoop stresses against the foam 33. These hoop stresses enhance the frictional bond between the sleeve 10 and the foam 25 or 33 and serve to anchor the sleeve to the joint agsinst the action of disruptive forces.

Secondly, the section 19 of the sleeve 10 shrunk directly onto the pipe casing 16 also creates a strong frictional bond due to the large hoop stress of the shrunk casing. In order for these hoop stresses to provide effective anchor points, the sleeve 10 is desirably formed from material having the properties of tensile strength at break, etc., as described above. The sleeve 10 is preferably a polymeric material crosslinked either by chemical methods or by irradiation methods. The contribution of the frictional bond due to the hoop stress of the casing can be controlled by increasing or decreasing the length of the shrunk-down section 19 i.e. the area of contact between the casing and the jacket. A larger area will provide a stronger anchor point. As a result of the hoop stresses forcing the shrunk down section 19 into contact with the casing 16, a fusion bond may be developed between the casing 16, when is is of heat-fusible material, e.g. is a polymeric material, and when sufficient heat is applied during or after the heat shrinking operation. This further augments the anchor of the sleeve 10 to the casings 16.

Thirdly, by tailoring the thickness and the material strength properties of the sleeve 10, the shrinking force of the sleeve in the section 19 can be controlled. By increasing the material strength properties such as secant modulus and tensile strength and degree of crosslink, the shrinking forces can be increased. With sufficient shrinking forces and the resulting hoop stresses and the heat applied during shrinking, a slight inward deformation of the pipe casing 16 can be achieved. The deformation results in slight reduction in the diameter of pipe casing 16, so that the diameter is smaller than the original diameter of the pipe casing 16. The beneficial effect of differential diameters as discussed above is obtained due to the constricted sleeve diameter being smaller than the pipe casing diameter.

Fourthly, when the above noted features of the sleeve are sufficient to withstand the disruptive forces, a functional coating 11, e.g. an adhesive or sealant, with low strength is adequate to provide a water-tight seal. However, the use of a strong adhesive as the functional coating 11 can provide not only a seal, but also an anchor point for the sleeve 10. This strong adhesive can be used alone or in combination with one or more weaker adhesives, the latter to provide a seal against water. For example the functional coating 11 in Figure 4 may comprise two axially-adjacent annular bands, one of strong adhesive, preferably the axially inner band adjacent the joint foam 25, and the outer band a band of weaker adhesive or sealant. The strong adhesive must have sufficient shear strength to contribute towards resistance to movement of the casing relative to the pipe jacket. The strong adhesive is preferably an adhesive with a shear strength greater than 40 pounds per square inch measured in accordance with test method ASTM D-1002 at a shear rate of 0.05"/minute at least as measured at 23°C and preferably at the temperature of service of the joint. The preferred shear strength is 100 to 400 p.s.i. at the operating temperature range of the pipeline. Adhesives having shear strength up to 1100 p.s.i. may be used in order to obtain highly resistant shear bond between the sleeve and the pipe casing. However, usually this is not necessary when other strength-contributing features of the applied sleeve exist.

The high strength of the adhesive is able to transfer the load from the pipe jacket to the casing without itself suffering any damage or breaking the seal. The area covered by the functional coating 11 can be controlled to impart the required shear strength to the connection. The bond between the joint insulation 26 or 23 and the sleeve 10, resulting from hoop stresses, as discussed above, enhance the shear stength of the connection offered by the joint.

Although thermosetting or solvent based adhesives, which are well known, can be used for the strong adhesive, the preferred adhesives are the semi-crystalline hot melt adhesives, which upon application of heat, become amorphous and soften and flow. These are also well known. The use of the latter adhesives facilitates coating the adhesive to the sleeve during manufacture, and the heat applied to shrink the sleeve will also activate and bond the adhesive.

Fifthly, when a high strength adhesive is used, an applied sleeve 10 having a profile as illustrated in Figure 3 is obtained, whereby differential diameters result. The differential diameters in this case are obtained as a result of thickness of the band 11 of high strength adhesive providing a mechanical obstruction to movement of the more constricted shrunk down portions 19 of the sleeve 10.

It will be apparent from the above that with the joint of the present invention a structure can be achieved which has sufficient axial rigidity that compressive or tensile loads applied axially to one of the casings 12 or 13 will be transmitted through the joint structure to the other casing, and the sleeve 10 will tend to move axially as a unit together with the casings 12 and 13, whereby the strength of the joint is sufficient to withstand the operational loads and stresses without breakdown of the seal.

The use of the functional coating materials and the sleeve materials described herein provide a joint that while being strong, tough, and adequately rigid axially, still has adequate flexibility toward lateral bending. Thus the flexural stresses of the pipeline will be absorbed by the sleeve and the functional coatings without damage to or breakdown of the seal. In the case in which a very rigid sleeve is employed, the use of a functional coating that does not become brittle, but maintains a degree of elasticity ensures a seal and/or bond is maintained even in the presence of these flexural forces.

One example of a sleeve in accordance with the present invention comprises a sleeve 10 as shown in Figures 1 and 2 having an external diameter of 130 mm, a wall thickness of 3 mm, and formed from medium density polyethylene (Dupont Canada Inc. Sclair 74A), having a density of 0.93 g/cc, melt index 0.75 decigrams/min, tensile yield strength 17 megapascals, ultimate tensile strength 14 megapascals, elongation at break 700%, stiffness (secant modulus) at 1% strain 425 megapascals, shore D hardness 63, vicat softening point 115°C, brittleness temperature less than -70°C, resistance to environmental stress cracking 1000 hrs no failure. The sleeve is 60% crosslinked, and has a heat shrink recoverability of 26%. The functional coating 11 is a semi-crystalline hot melt polymeric adhesive available under designation HHR 85 from Canusa Coating Systems Limited, Rexdale, Ontario, Canada, and is applied in a thickness of 0.6 mm in a band 50 mm wide extending inwardly from the extreme ends of the sleeve. The sleeve is formed with a foam pouring hole 15 mm diameter and a vent hole 3 mm diameter.

The preferred form of the sleeve is a one-piece tubular sleeve all of which is heat-shrinkable. This has the advantage of being useable for varying applications e.g. before of after foaming. However the sleeve may be made in other forms which will provide the finished joints as described herein.

The sleeve 10 may be an integrally molded tube with a non-heat-shrinkable middle portion and heat-shrinkable end portions made, for example, by molding or otherwise forming a sleeve with initially constricted end portions and expanding the end portions to, for example, the same diameter as the middle portion to impart to them a heat shrink memory.

In a further variation, as shown in Figure 8, the sleeve has a middle section 10a which is a non-shrinkable tube, and two heat shrink sections 10b are applied at each end. A suitable adhesive 34 secures the heat-shrinkable sections 10b to the middle tube 10a.

The examples of sleeves, the methods of application of the sleeves and of fabrication of the joint, and the final finished joints described herein are by way of example only. Many other variations will be apparent to those skilled in the art.

For example, a narrow middle section of the sleeve 10 can be constricted so that this provides for mechanical obstruction to movement of the sleeve relative to the pipeline sections. There may be more than one such constriction.

Further, the sleeve may be made from a one-piece tubular section whose middle section is non-shrinkable with only the end positions being shrinkable.

The entire inside surface of the sleeve may be covered with a suitable sealing material, strong adhesive' or other functional coating.

The sealing materials alone or the strong adhesives alone or combinations of both may be positioned in a number of ways on the inside surface of the sleeve, in shrinkable or non-shrinkable areas.

The extreme ends of the sleeve may be tapered, as shown in Figure 6A. One advantage of this is that the tapered surface offers less resistance against the soil stresses when pipe movement occurs. Also if the taper is long enough, the sealing material or adhesive in the casing below the tapered legion can be heat activated more quickly on heating. The shrinking of the tapered, and hence thinner, sleeve portion will be faster, and hence less heating need be applied to the ends of the sleeve, thus reducing the risk of prolonged heating damaging the pipeline casing 16.

CLAIMS:

1.      A preinsulated pipeline joint comprising first and second preinsulated pipeline sections having their ends juxtaposed and each comprising an outer casing, a pipe extending through and beyond the ends of the casing, and insulation material between the pipe and the casing, the ends of the pipes of the first and second sections being joined together, a jacketing extending between the juxtaposed ends of the first and second casings, and joint insulation material between the jacketing and the joined pipes, characterized in that the jacketing comprises a tubular sleeve of which at least each end portion is capable of having a heat shrink memory imparted to it, each end portion being heat shrunk down toward and being secured against axial movement relative to the adjacent end of said pipeline casings, and the sleeve and its securement to the casings offering sufficient rigidity that tensile and compressive forces applied axially to one casing are transmitted through the sleeve to the other casing.

2.      A joint as claimed in claim 1 characterized in that the sleeve comprises a preferably integrally-formed non-heat shrinkable middle portion and a discrete heat shrinkable end portion connected to each end thereof.

3.      A joint as claimed in claim 1 or 2 characterized in that at least adjacent each of its ends the sleeve has a circumferentially extending zone adjacent the joint insulation material which is of internal diameter different from and preferably greater than the external diameter of the pipeline casing.

4.      A joint as claimed in any preceding claim characterized in that adjacent each end of the sleeve a layer of a functional coating is interposed between and forms a seal between at least one circumferentially extending zone of the inner surface of the shrunk down portion and the outer surface of the pipeline casing, and optionally a portion of the sleeve spaced axially inwardly from the end is shrunk down into tight contact with the outer surface of the casing.

5.      A joint as claimed in claim 4 characterized in that the functional coating is an adhesive having a shear strength of at least 2, preferably 3 to 1100, more preferably 100 to 400, psi measured in accordance with ASTM D-1002 at a shear rate of 0.05 inch/minute and a peel strength of at least 3 lb./linear inch measured in accordance with ASTM D-1000 at 12 in/minute, both at the operating temperature of the outer surface of the pipeline casing.

6.      A method of forming a preinsulated pipeline joint comprising juxtaposing the ends of first and second preinsulated pipeline sections each comprising an outer casing, a pipe extending through and beyond the ends of the casing, and insulation material between the pipe and the casing, joining the juxtaposed ends of the pipe together, positioning jacketing to extend between the juxtaposed ends of the casing, and providing joint insulation material between the jacketing and the joined pipes, characterized in that the jacketing comprises a tubular sleeve of internal diameter greater than the external diameter of the casings, and of which at least each end portion is heat shrinkable, and including the step of heat shrinking at least each said end portion to shrink each end portion toward the outer surface of the adjacent end of the casing and to secure the shrunk-down end portion to the casing, the sleeve and its securement to the casing offering sufficient rigidity that tensile and compressive forces applied axially to one casing are transmitted through the sleeve to the other casing.

7.      A method as claimed in claim 6 characterized in that the sleeve is provided with an inlet hole through its wall and a vent hole axially spaced therefrom, and including the step of introducing a liquid precursor of a rigid plastic foam through the inlet hole after heat shrinking said end portions, closing the inlet hole with a closure member, allowing the foam to expand to fill the inner side of the sleeve, and closing the vent hole with a closure member.

8.      A method as claimed in claim 6 characterized by heat shrinking the intermediate portion of the sleeve down toward and into securement with a preformed rigid foam section, disposed around the joined ends of the pipe.

9.    A tubular sleeve for forming a pipeline joint as claimed in claim 1, characterized in that the sleeve having at least each end portion heat shrinkable, and having sufficient rigidity to transmit through it axial tensile and compressive forces applied to the casing of one of said pipeline sections to the casing of the other.

10.    A tubular sleeve as claimed in claim 9 characterized by having:

| | |
|---|---|
| tensile strength at break (ASTM D-638,2 inch/min) | - about 1500 to about 8000 preferably 4000 to 6000 psi; |
| tensile elongation at break (ASTM D-638, 2 inch/min) | - about 100 to about 1000 preferably 500 to 800%; |
| shore D hardness (ASTM D-2240) | - about 40 to about 85 preferably 60 to 72; |
| secant modulus at 2% strain (ASTM D-638, extension rate 2 inch/ minute) | - about 16000 to 500,000 psi preferably 40,000 to 80,000 |
| low temperature brittleness (ASTM D-746) | - about -120 to about -25°C and preferably less than -50°C; |
| vicat softening point (ASTM D-1525) | - about 72°C to about 170°C preferably 90 to 130°C; and |
| resistance to environmental cracking (ASTM D-1693, 23°C, 10% IGEPAL) | pass minimum 336 hours. |

11.    A sleeve as claimed in claim 9 or 10 characterized by the sleeve having a main portion which is non-heat-shrinkable and a discrete heat-shrinkable end portion

- 24 -

0188363

secured to each end of the main portion, optionally by a high strength adhesive.

12. A sleeve as claimed in claim 9 or 10 characterized by an integrally formed tube having a non-heat-shrinkable middle portion and heat shrinkable end portions formed integrally therewith.

13. A sleeve as claimed in any of claims 9 to 12 characterized by having its heat shrink recoverability of from about 5 to about 90%, preferably 20 to 50%.

14. A sleeve as claimed in any of claims 9 to 13 characterized by having its wall thickness between about 2.5 mm and 10 mm, preferably 2.5 to 6 mm, more preferably 3 to 4 mm.

15. A sleeve as claimed in any of claims 12 to 14 characterized by having a functional coating such as sealant, grease, putty, mastic or adhesive, preferably high strength adhesive, on the inner surface of at least a circumferentially extending zone of each said end portion, and optionally on the whole of its inner surface.

16. A sleeve as claimed in claim 15 characterized in that the adhesive has a shear strength of 3 to 1100, preferably 100 to 400, psi (ASTM D-1002, shear rate of 0.05 inch/min, 23°C).

17. A sleeve as claimed in any of claims 9 to 16 characterized by having spaced inwardly from its end portions two axially spaced holes, one preferably longer than the other, for introduction of liquid precursor of foam insulation and for venting, respectively, and optionally in combination therewith a closure plug for each hole having a body adapted to be received snugly in the hole, an enlarged head adapted to seat around the periphery of the hole and a lower laterally resiliently compressible body portion of greater diameter than its respective hole, preferably with optionally upwardly extending deflectable tangs and a pointed lower end.

**FIG. 1**

**FIG. 2**

**FIG. 3**

**FIG. 4**

0188363

2/3

FIG. 5

FIG. 6

FIG. 7

FIG. 8

FIG. 9

FIG. 6A

FIG. 10

FIG. 11

## DOCUMENTS CONSIDERED TO BE RELEVANT

EP 86300197.0

| Category | Citation of document with indication, where appropriate, of relevant passages | Relevant to claim | CLASSIFICATION OF THE APPLICATION (Int. Cl.4) |
|---|---|---|---|
| Y | <u>EP - A1 - 0 079 702</u> (N.V. RAYCHEM S.A.)<br>  * Totality * <br>-- | 1,4,6, 7 | F 16 L 59/16<br>F 16 L 13/00<br>F 16 L 13/11 |
| Y | <u>EP - A1 - 0 075 901</u> (VON ROLL AG)<br>  * Totality * <br>-- | 1,4,6, 7 | |
| A | <u>WO - A1 - 84/03 346</u> (ANIA B.V.)<br>  * Totality * <br>-- | 1,4,6 | |
| A | <u>US - A - 3 801 140</u> (KELLER)<br>  * Totality * <br>-- | 1,4 | |
| A | <u>DE - A1 - 3 303 029</u> (ZIEMEK)<br>  * Totality * <br>-- | 1,6 | TECHNICAL FIELDS SEARCHED (Int. Cl.4) |
| A | <u>GB - A - 2 039 654</u> (RAYCHEM CORP.)<br>  * Totality * <br>-- | 1,6 | F 16 L 13/00<br>F 16 L 59/00 |
| A | <u>DE - A - 2 252 295</u> (A/SE RASMUSSEN)<br>  * Totality * <br>---- | 1,7 | |

The present search report has been drawn up for all claims

| Place of search | Date of completion of the search | Examiner |
|---|---|---|
| VIENNA | 04-03-1986 | SCHUGANICH |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82